# EUROPÄISCHE PATENTSCHRIFT

(11) **EP 2 784 133 B1**
(45) Veröffentlichungstag und Bekanntmachung des Hinweises auf die Patenterteilung: **04.01.2017**
(21) Anmeldenummer: 13161436.4
(22) Anmeldetag: 27.03.2013
(51) Int. Cl.: B41M 5/337, C09B 11/24, B41M 5/32, B41M 5/333, B41M 5/327

(54) **Zusammensetzung zur Ausbildung einer visuell erkennbaren Farbe und entsprechendes wärmeempfindliches Aufzeichnungsmaterial**
Composition for forming a visually recognisable colour and heat-sensitive recording material using the same
Composition destinée à la formation d'une couleur visuellement reconnaissable et matériel d'enregistrement thermosensible correspondant

(43) Veröffentlichungstag der Anmeldung: 01.10.2014
(73) Patentinhaber: Mitsubishi HiTec Paper Europe GmbH, 33699 Bielefeld (DE)
(72) Erfinder: Neukirch, Matthias, 24943 Flensburg (DE); Wilke, Nora, 24848 Kropp (DE)
(74) Vertreter: Eisenführ Speiser

(56) Entgegenhaltungen:
- EP-A1- 0 432 091
- EP-A1- 0 899 126
- EP-A1- 2 279 877
- US-A1- 2005 282 704

## Beschreibung

Die vorliegende Erfindung betrifft (i) eine Zusammensetzung zur Ausbildung einer visuell erkennbaren Farbe, (ii) die Verwendung dieser Zusammensetzung zur Herstellung eines wärmeempfindlichen Aufzeichnungsmaterials, (iii) das entsprechende wärmeempfindliches Aufzeichnungsmaterial umfassend ein Substrat und diese Zusammensetzung sowie (iv) ein Verfahren zur Herstellung des wärmeempfindlichen Aufzeichnungsmaterials.

Wärmeempfindliche Aufzeichnungsmaterialien sind seit den frühen Jahren chemisch reagierender Aufzeichnungsmaterialien bekannt und erfreuen sich einer ständig wachsenden Verbreitung. Die ist unter anderem darauf zurückzuführen, dass der Einsatz solcher wärmeempfindlichen Aufzeichnungsmaterialien für den Geschäftsmann mit großen Vorteilen verbunden ist. Weil die farbbildenden Komponenten in dem wärmeempfindlichen Aufzeichnungsmaterial selbst lokalisiert sind, erfolgt die Herstellung einer wärmeinduzierten Aufzeichnung (wärmeinduziertes Druckbild, nachfolgend auch als Thermoausdruck bezeichnet) auf einem derartigen wärmeempfindlichen Aufzeichnungsmaterial mittels Toner- und Farbkartuschen-freier und daher wartungsarmer und kostengünstiger Drucker. Dies ist besonders vorteilhaft für Anwendungen, bei denen schnell große Mengen an Thermoausdrucken zu erzeugen sind. So hat sich diese Technologie insbesondere im öffentlichen Personenverkehr, bei Bussen und Bahnen genauso wie im Flugverkehr, an Stadion- und Museumskassen, beim Ticketverkauf für Großveranstaltungen sowie bei Parkausweisausgebern durchgesetzt.

Von zunehmend größerer Bedeutung ist die Umweltverträglichkeit solcher wärmeempfindlichen Aufzeichnungsmaterialien. Dieser (erste) Aspekt rückt zunehmend in den Mittelpunkt, da bestimmte Farbentwickler, die üblicherweise in diesen wärmeempfindlichen Aufzeichnungsmaterialien Verwendung finden, nur schwer oder unzureichend biologisch abbaubar sind. So stehen beispielsweise die Verbindungen
- Bisphenol-A, (d.h. 2,2-Bis-(4-hydroxyphenyl)-propan) und
- Bisphenol-S, (d.h. 4,4'-Dihydroxydiphenylsulfon)
in der Kritik. EP 0432091 nennt als organische Farbentwickler verschiedene feste Carbonsäuren und zitiert bei den anorganischen Entwicklern Zinknitrat bzw. Zinkchlorid.

Neben der Herausforderung, wärmeempfindliche Aufzeichnungsmaterialien zur Verfügung zu stellen, deren Farbentwickler zumindest weitgehend biologisch abbaubar und damit weitestgehend ökologisch unbedenklich sind, besteht hinsichtlich eines zusätzlichen (zweiten) Aspektes die ständige Herausforderung, diese Aufzeichnungsmaterialien hinsichtlich ihrer Druckdichte zu optimieren. Hierunter ist insbesondere zu verstehen, ein wärmeempfindliches Aufzeichnungsmaterial durch Zusatz verstärkend wirkender Verbindungen so einzustellen, dass die Druckdichte (d.h. die erwünschte Schwärzung bzw. der Schwärzegrad) des Thermoausdrucks erhöht wird, verglichen mit einem nicht solche verstärkend wirkenden Verbindungen umfassenden wärmeempfindlichen Aufzeichnungsmaterial. Typischerweise bestimmt der Fachmann die Druckdichte eines Thermoausdrucks mittels eines Densitometers.

Eine primäre Aufgabe der vorliegenden Erfindung war es, eine Zusammensetzung zur Ausbildung einer visuell erkennbaren Farbe und ein mit dieser Zusammensetzung hergestelltes wärmeempfindliches Aufzeichnungsmaterial anzugeben, deren (a) Farbentwickler ökologisch weitgehend unbedenklich sind und/oder (b) deren dynamische Druckdichte und/oder statische Druckdichte modifiziert ist (im Vergleich mit einer ansonsten identisch zusammengesetzten Referenzzusammensetzung; zum Vergleich siehe unten), vorzugsweise so, dass die maximale dynamische Druckdichte und/oder maximale statische Druckdichte erhöht ist. Zusätzlich soll die Zusammensetzung bzw. das wärmeempfindliche Aufzeichnungsmaterial unter wirtschaftlich vertretbarem Aufwand herstellbar sein. Diese Aufgabe wird erfindungsgemäß gelöst durch eine Zusammensetzung zur Ausbildung einer visuell erkennbaren Farbe, umfassend die Komponenten, vorzugsweise bestehend aus den Komponenten
a) einen, zwei, drei oder mehr Farbentwickler(-Verbindungen), jeweils umfassend eine, zwei, drei oder mehr als drei strukturelle Einheiten der Formel (I) 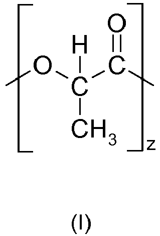 wobei z in jeder der strukturellen Einheiten der Formel (I) eine ganze Zahl größer 1 bedeutet, wobei die jeweilige Bedeutung unabhängig ist von der Bedeutung in gegebenenfalls vorhandenen weiteren strukturellen Einheiten der Formel (I),
b) einen, zwei, drei oder mehr Farbstoffvorläufer(-Verbindungen) zur Ausbildung der visuell erkennbaren Farbe durch Reaktion mit dem bzw. den Farbentwicklern,
   und
c) eine, zwei oder mehr Verbindungen, ausgewählt aus der Gruppe bestehend aus Zinksalzen, Ammoniumsalzen und Zinkoxid, vorzugsweise ausgewählt aus der Gruppe bestehend aus Zinkcarbonat, Zinkoxid, Ammoniumhydrogensulfat, Ammoniumnitrat, Ammoniumhydrogenphosphat und Zinkacetat.

Farbentwicklerverbindungen, jeweils umfassend eine, zwei, drei oder mehr als drei strukturelle Einheiten der Formel (I), sind regelmäßig vollständig biologisch abbaubar und weisen damit eine hervorragende Umweltverträglichkeit auf. Zusätzlich eignen sie sich durch Reaktion mit einem Farbstoffvorläufer hervorragend zur Ausbildung der visuell erkennbaren Farbe.

In einer Reihe von durchgeführten Versuchen hat sich nun überraschenderweise gezeigt, dass eine erfindungsgemäße Zusammensetzung (wie oben definiert), d.h. umfassend eine, zwei oder mehr Verbindungen der Komponente c) zu einer unerwarteten Modifizierung der dynamischen und/oder statischen Druckdichte führt. Die Modifizierung dieser Druckdichten ist insbesondere deshalb überraschend, da nicht zu erwarten war, dass die Verbindungen der Komponente c) in Kombination mit den Verbindungen der Komponente a) (Farbentwickler) und Komponente b) (Farbstoffvorläufer) zu einer solchen Modifizierung der Druckdichten führen.

Bevorzugt ist jedoch eine erfindungsgemäße Zusammensetzung (wie oben definiert), wobei die eine, zwei oder mehr Verbindungen der Komponente c) die maximale dynamische Druckdichte und/oder die maximale statische Druckdichte erhöhen.

In eigenen Untersuchungen hat sich gezeigt, dass beispielsweise klassische verstärkend wirkende Verbindungen wie beispielsweise Fettsäureamide keine oder zumindest keine signifikante Erhöhung der maximalen dynamischen und/oder maximalen statischen Druckdichte bewirken.

Die Bestimmung der Druckdichte erfolgte dabei mittels eines Densitometers am Thermoausdruck, d.h. am wärmeempfindlichen Aufzeichnungsmaterial nach dem Thermodrucken.

Die dynamische Druckdichte entspricht den jeweils mittels Densitometer ermittelten Druckdichten bezogen auf die entsprechenden eingestrahlten Energiemengen pro Flächeneinheit (mJ/mm²). Üblicherweise trägt der Fachmann die für jeden Energieeintrag ermittelten Druckdichten in ein Diagramm ein, um eine dynamische Druckdichtekurve zu erstellen (Abszisse: Energie in mJ/mm²; Ordinate: Druckdichte).

Die statische Druckdichte hingegen entspricht den jeweils mittels Densitometer ermittelten Druckdichten bezogen auf die entsprechenden Temperaturen (denen ein wärmeempfindliches Aufzeichnungsmaterial für einen definierten Zeitraum und unter einem definierten Anpressdruck ausgesetzt wird). Auch hier erstellt der Fachmann üblicherweise ein Diagramm, worin die Druckdichten den entsprechenden Temperaturen gegenübergestellt werden, um eine statische Druckdichtekurve zu erstellen (Abszisse: Temperatur, Ordinate: Druckdichte).

Die maximale dynamische Druckdichte bzw. die maximale statische Druckdichte entspricht in den jeweiligen Diagrammen den höchsten Werten auf der Ordinate, also den höchsten ermittelten dynamischen bzw. statischen Druckdichten.

Wie bereits weiter oben erwähnt, wird die Druckdichte am Thermoausdruck bestimmt. Um die maximale dynamische Druckdichte bzw. die maximale statische Druckdichte einer erfindungsgemäßen Zusammensetzung (wie oben beschrieben, vorzugsweise eine Zusammensetzung wie oben als bevorzugt definiert) zu bestimmen (bzw. deren Erhöhung beurteilen zu können), wird die Zusammensetzung auf ein Substrat (z.B. Papier) unter definierten Bedingungen aufgebracht, um ein definiertes wärmeempfindliches Testaufzeichnungsmaterial herzustellen.

Die maximale dynamische Druckdichte bzw. die maximale statische Druckdichte ist dann erhöht, wenn das definierte wärmeempfindliche Testaufzeichnungsmaterial eine höhere maximale dynamische Druckdichte und/oder eine höhere maximale statische Druckdichte aufweist, verglichen mit der entsprechenden Druckdichte eines wärmeempfindlichen Referenzaufzeichnungsmaterials, welches bei identischen Parametern ausgedruckt und hergestellt wurde und bei ansonsten identischer Zusammensetzung und identischem Aufbau keine Verbindung(en) der Komponente c) enthält.

Die Druckdichte wird üblicherweise in "optical density units" (ODU) angegeben. Eine Druckdichte von 0,6 ODU wird regelmäßig vom menschlichen Auge in Form von Grautönen wahrgenommen, während eine Druckdichte von 1,1 ODU regelmäßig als schwarz wahrgenommen wird.

Die strukturelle Einheit der Formel (I) bezieht sich auf miteinander veresterte Monomere der Milchsäure. Milchsäure existiert sowohl als linksdrehende Milchsäure (D-(-)-Milchsäure oder auch (R)-Milchsäure) als auch als rechtsdrehende Milchsäure (L-(+)-Milchsäure oder auch (S)-Milchsäure). Besonders bevorzugt ist eine erfindungsgemäße Zusammensetzung (wie oben beschrieben, vorzugsweise eine Zusammensetzung wie oben als bevorzugt definiert), wobei die strukturelle Einheit der Formel (I) einheitlich aus rechtsdrehenden Milchsäuremonomeren gebildet ist. In anderen Ausführungsformen ist es jedoch bevorzugt, dass die strukturelle Einheit der Formel (I) einheitlich aus linksdrehenden Milchsäuremonomeren oder aus abwechselnd rechts- und linksdrehenden Milchsäuremonomeren gebildet wird.

Bevorzugt ist eine erfindungsgemäße Zusammensetzung (wie oben beschrieben, vorzugsweise eine Zusammensetzung wie oben als bevorzugt definiert), wobei z in jeder der strukturellen Einheiten der Formel (I) eine ganze Zahl im Bereich von 2 bis 52, vorzugsweise im Bereich von 2 bis 25 ist und die jeweilige Bedeutung von z unabhängig ist von der Bedeutung in gegebenenfalls vorliegenden weiteren strukturellen Einheiten der Formel (I).

In einer bevorzugten erfindungsgemäßen Zusammensetzung (wie oben beschrieben, vorzugsweise eine Zusammensetzung wie oben als bevorzugt definiert) weisen Farbentwickler umfassend strukturelle Einheiten der Formel (I) eine Molmassenverteilung im Bereich von 140 bis 5000 g/mol auf, vorzugsweise eine Molmassenverteilung im Bereich von 400 bis 3800 g/mol, besonders bevorzugt eine Molmassenverteilung im Bereich von 600 bis 2000 g/mol. Farbentwickler mit eine solchen Molmassenverteilung weisen ein besonders günstiges Verhältnis von negativer Ladung (durch die Carboxylgruppe) zu Molekulargewicht auf. Vorzugsweise liegen 90 Gew.-% oder mehr der Farbentwickler umfassend strukturelle Einheiten der Formel (I) im (jeweils) angegebenen Molmassenbereich.

Dem Fachmann sind natürlich geeignete Methoden bekannt, um die Molmassenverteilung zu bestimmen. Eine bevorzugte Methode ist dabei die Gelpermeationschromatographie (auch Größenausschlusschromatographie).

Der Fachmann wird im Rahmen der vorliegenden Erfindung üblicherweise durch eine Reihe einfacher, vergleichender Versuche die genaue Gesamtmenge an Verbindungen der Komponente c) ermitteln, die nötig ist, um die gewünschte Modifizierung der dynamischen und/oder statischen Druckdichte, vorzugsweise eine Erhöhung der maximalen dynamischen Druckdichte und/oder der maximalen statischen Druckdichte einzustellen. Bevorzugt ist üblicherweise eine erfindungsgemäße Zusammensetzung (wie oben beschrieben, vorzugsweise eine Zusammensetzung wie oben als bevorzugt definiert), wobei die Gesamtmenge der Komponente c) im Bereich von 7 bis 33 Gew.-% liegt, vorzugsweise im Bereich von 12 bis 25 Gew.-%, bevorzugt im Bereich von 14 bis 20 Gew.-%, bezogen auf die Gesamtmasse der Komponenten a) und b) und c).

Besonders bevorzugt ist eine erfindungsgemäße Zusammensetzung (wie oben beschrieben, vorzugsweise eine Zusammensetzung wie oben als bevorzugt definiert), wobei die eine, zwei oder mehr Verbindungen der Komponente c) ausgewählt sind aus der Gruppe bestehend aus organischen Zinksalzen, anorganischen Zinksalzen, anorganischen Ammoniumsalzen und Zinkoxid, wobei vorzugsweise die Gesamtzahl der Kohlenstoffatome in den organischen Resten der organischen Zinksalze 10 oder kleiner ist, vorzugsweise 5 oder kleiner ist. Besonders bevorzugt sind die Verbindungen der Komponente c) ausgewählt aus der Gruppe bestehend aus Zinkcarbonat, Zinkoxid, Ammoniumhydrogensulfat und Zinkacetat, vorzugsweise ausgewählt aus der Gruppe bestehend aus Zinkcarbonat, Zinkoxid und Zinkacetat, besonders bevorzugt ausgewählt aus der Gruppe bestehend aus Zinkoxid und Zinkacetat.

Gemäß einer speziellen Ausführungsform ist eine erfindungsgemäße Zusammensetzung bevorzugt (wie oben beschrieben, vorzugsweise eine Zusammensetzung wie oben als bevorzugt definiert), wobei die eine, zwei oder mehr Verbindungen der Komponente c) ausschließlich aus der Gruppe der Ammoniumsalze ausgewählt sind. Besonders bevorzugt sind die Verbindungen ausgewählt aus der Gruppe bestehend aus Ammoniumhydrogensulfat, Ammoniumnitrat und Ammoniumhydrogenphosphat.

Besonders bevorzugt ist eine erfindungsgemäße Zusammensetzung (wie oben beschrieben, vorzugsweise eine Zusammensetzung wie oben als bevorzugt definiert) nicht umfassend Zinkstearat und/oder Zinkpolysalicylate.

Bevorzugt ist eine erfindungsgemäße Zusammensetzung (wie oben beschrieben, vorzugsweise eine Zusammensetzung wie oben als bevorzugt definiert), wobei einer, zwei, drei, mehr als drei oder sämtliche der Farbstoffvorläufer eine Verbindung ist bzw. sind, ausgewählt aus der Gruppe, bestehend aus 3-Diethylamino-6-methyl-7-anilinofluoran, 3-Dibutylamino-6-methyl-7-anilinofluoran, 3-(N-methyl-N-propyl)amino-6-methyl-7-anilinofluoran, 3-(N-ethyl-N-isoamyl)amino-6-methyl-7-anilinofluoran, 3-(N-methyl-N-cyclohexyl)amino-6-methyl-7-anilinofluoran, 3-(N-ethyl-N-tolyl)amino-6-methyl-7-anilinofluoran und 3-(N-ethyl-N-tetrahydrofuryl)amino-6-methyl-7-anilinofluoran. Besonders bevorzugt ist, dass eine erfindungsgemäße Zusammensetzung mindestens einen Farbstoffvorläufer aus der oben genannten Gruppe umfasst. Ganz besonders bevorzugt ist 3-Dibutylamino-6-methyl-7-anilinofluoran - auch bekannt als ODB-2.

Eine bevorzugte erfindungsgemäße Zusammensetzung umfasst neben diesen als Farbstoffvorläufer angegebenen Verbindungen zusätzlich auch eine oder mehrere der folgenden, im nahen Infrarot-Bereich absorbierenden Verbindungen:
3,6-Bis(dimethylamino)fluoren-9-spiro-3'-(6'-dimethylaminophthalid), 3-Diethylamino-6-dimethylaminofluoren-9-spiro-3'-(6'-dimethylaminophthalid), 3,6-Bis(diethylamino)-fluoren-9-spiro-3'-(6'-dimethylaminophthalid), 3-Dibutylamino-6-dimethylaminofluoren-9-spiro-3'-(6'-dimethylaminophthalid), 3-Dibutylamino-6-diethylaminofluoren-9-spiro-3'-(6'-dimethylaminophthalid), 3,6-Bis(dimethylamino)fluoren-9-spiro-3'-(6'-diethylamino-phthalid), 3-Diethylamino-6-dimethylaminofluoren-9-spiro-3'-(6'-diethylaminophthalid), 3-Dibutylamino-6-dimethylaminofluoren-9-spiro-3'-(6'-diethylaminophthalid), 3,6-Bis-(di-ethylamino)fluoren-9-spiro-3'-(6'-diethylaminophthalid), 3,6-Bis-(dimethylamino)-fluoren-9-spiro-3'-(6'-dibutylaminophthalid), 3-Dibutylamino-6-di-ethylaminofluoren-9-spiro-3'-(6'-diethylaminophthalid), 3-Diethylamino-6-dimethylaminofluoren-9-spiro-3'-(6'-dibutylaminophthalid), 3,3-Bis[2-(4-dimethylamino-phenyl)-2-(4-methoxyphenyl)-ethenyl]-4,5,6,7-tetrachlorophthalid.

Verbindungen der Komponente b), vorzugsweise die vorstehend genannten Farbstoffvorläufer sind durch Reaktion mit dem bzw. den Verbindungen der Komponente a) unter geeigneten Bedingungen zur Ausbildung der visuell erkennbaren Farbe geeignet. Die Reaktion zwischen Farbentwickler und Farbstoffvorläufer, die zur Ausbildung der visuell erkennbaren Farbe führt, ist eine Redoxreaktion, d.h. ist durch Elektronenaufnahme und Elektronenabgabe gekennzeichnet. Besonders bevorzugt ist daher eine erfindungsgemäße Zusammensetzung (wie oben beschrieben, vorzugsweise eine Zusammensetzung wie oben als bevorzugt definiert), wobei die Reaktion einer Verbindung der Komponente b) mit einer Verbindung der Komponente a) zur Ausbildung der visuell erkennbaren Farbe eine Redoxreaktion ist. Ohne nachteilig durch eine Theorie gebunden zu sein, wird vermutet, dass sich dabei ein Gleichgewicht zwischen Reaktionsprodukt (das als visuell erkennbare Farbe wahrgenommen wird) und Edukte (Farbstoffvorläufer und Farbentwickler) einstellt. Dieses Gleichgewicht wird vermutlich durch Zugabe einer oder mehrerer Verbindungen der Komponente c) beeinflusst. Verbindungen der Komponente c) verschieben vermutlich das Gleichgewicht in Richtung des Reaktionsproduktes und bewirken dadurch vorzugsweise eine Erhöhung der maximalen dynamischen Druckdichte und/oder der maximalen statischen Druckdichte.

Die oben beschriebene Reaktion der Verbindungen der Komponente b) mit Verbindungen der Komponente a) setzt ein, wenn die für diese Reaktion notwendige Energie eingetragen wird. Bevorzugt ist eine erfindungsgemäße Zusammensetzung (wie oben beschrieben, vorzugsweise eine Zusammensetzung wie oben als bevorzugt definiert), wobei die Zusammensetzung so eingerichtet ist, dass die visuell erkennbare Farbe bei Erhöhung der Temperatur der Zusammensetzung ausgebildet wird.

Besonders bevorzugt ist eine erfindungsgemäße Zusammensetzung (wie oben beschrieben, vorzugsweise eine Zusammensetzung wie oben als bevorzugt definiert), wobei einer, zwei, drei, mehr als drei oder sämtliche der Farbentwickler eine Verbindung der Formel (la) 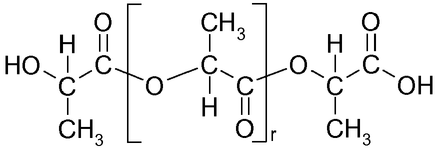 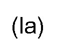 sind, wobei r in der Verbindung der Formel (la) unabhängig von gegebenenfalls vorliegenden weiteren Farbentwicklern der Formel (la) eine ganze Zahl ist, vorzugsweise unabhängig von gegebenenfalls vorliegenden weiteren Farbentwicklern der Formel (la) im Bereich von 4 bis 50 liegt.

Verbindungen der Formel (la) weisen jeweils eine freie (d.h. eine nicht veresterte) Carboxylgruppe auf. Eigene Untersuchungen haben jedoch gezeigt, dass es häufig vorteilhaft ist, die Anzahl der nutzbaren (d.h. der freien Carboxylgruppen) zu erhöhen, indem man Verbindungen enthaltend mehrere strukturelle Einheiten der Formel (I) mit einer mehrwertigen organischen Säure zur Reaktion bringt. Freie Carboxylgruppen sind häufig insbesondere deshalb wichtig, weil sie bei der Reaktion mit den Verbindungen der Komponente b) von Bedeutung sind.

Besonders bevorzugt ist dabei eine erfindungsgemäße Zusammensetzung (wie oben beschrieben, vorzugsweise eine Zusammensetzung wie oben als bevorzugt definiert), umfassend mindestens einen Farbstoffvorläufer (d.h. mindestens eine Verbindung der Komponente b)) und eine Kombination aus mindestens zwei verschiedenen Farbentwicklern (d.h. mindestens zwei verschiedene Verbindungen der Komponente a)), wobei jeder der mindestens zwei verschiedenen Farbentwickler hergestellt ist durch Umsetzung einer x-wertigen Carbonsäure mit Verbindungen enthaltend strukturelle Einheiten der Formel (I), wobei z in jeder der strukturellen Einheiten der Formel (I) eine ganze Zahl größer 1 bedeutet, wobei die jeweilige Bedeutung unabhängig ist von der Bedeutung in den vorhandenen weiteren strukturellen Einheiten der Formel (I), wobei x (d.h. die Zahl der Säurefunktionen in der x-wertigen Carbonsäure) vorzugsweise zwei ist.

Besonders bevorzugt ist eine erfindungsgemäße Zusammensetzung (wie oben beschrieben, vorzugsweise eine Zusammensetzung wie oben als bevorzugt definiert), wobei einer, zwei, drei, mehr als drei oder sämtliche der Farbentwickler herstellbar sind durch
I) Umsetzung (unter Bildung eines Esters) jeweils einer x-wertigen Carbonsäure mit Verbindungen enthaltend strukturelle Einheiten der Formel (I), wobei z in jeder der strukturellen Einheiten der Formel (I) eine ganze Zahl größer 1 bedeutet, wobei die jeweilige Bedeutung unabhängig ist von der Bedeutung in gegebenenfalls vorhandenen weiteren strukturellen Einheiten der Formel (I), wobei x zwei, drei oder mehr als drei ist.

Ganz besonders bevorzugt ist eine erfindungsgemäße Zusammensetzung (wie oben beschrieben, vorzugsweise eine Zusammensetzung wie oben als bevorzugt definiert) umfassend zwei, drei oder mehr als drei Farbentwickler,
(I) wobei ein erster Farbentwickler herstellbar ist durch
   Umsetzung einer x-wertigen Carbonsäure mit Verbindungen enthaltend strukturelle Einheiten der Formel (I), wobei z in jeder der strukturellen Einheiten der Formel (I) eine ganze Zahl größer 1 bedeutet, wobei die jeweilige Bedeutung unabhängig ist von der Bedeutung in gegebenenfalls vorhandenen weiteren strukturellen Einheiten der Formel (I), wobei x zwei, drei oder mehr als drei ist,
(II) und wobei ein zweiter Farbentwickler herstellbar ist durch
   Umsetzung einer y-wertigen Carbonsäure mit Verbindungen enthaltend strukturelle Einheiten der Formel (I), wobei z in jeder der strukturellen Einheiten der Formel (I) eine ganze Zahl größer 1 bedeutet, wobei die jeweilige Bedeutung unabhängig ist von der Bedeutung in gegebenenfalls vorhandenen weiteren strukturellen Einheiten der Formel (I), wobei y drei oder mehr als drei ist,
   mit der Maßgabe, dass die x-wertige Carbonsäure nicht identisch ist mit der y-wertigen Carbonsäure, wobei y (d. h. die Zahl der Säurefunktionen in der y-wertigen Carbonsäure) vorzugsweise größer ist als x.

Es versteht sich insoweit, dass die zur Herstellung der jeweiligen Farbentwickler eingesetzten Verbindungen enthaltend strukturelle Einheiten der Formel (I) zur Umsetzung mit der x-wertigen bzw. y-wertigen Carbonsäure geeignet sind, z.B. weil sie freie Hydroxygruppen tragen, die zur Veresterung der Carbonsäure eingesetzt werden können.

In diesen bevorzugten Fällen können regelmäßig rheologische Eigenschaften gezielt eingestellt werden, die bei der Auftragung dieser erfindungsgemäßen Zusammensetzung auf ein Substrat zur Herstellung eines wärmeempfindlichen Aufzeichnungsmaterials eine bedeutende Rolle spielen. Zusätzlich kann dadurch in vielen Fällen die Empfindlichkeit gegenüber der farbauslösenden Behandlung gezielt eingestellt werden.

Besonders bevorzugt ist eine erfindungsgemäße Zusammensetzung (wie oben beschrieben, vorzugsweise eine Zusammensetzung wie oben als bevorzugt definiert), wobei x = 2 ist und eine oder mehr als eine der somit 2-wertigen umgesetzten Carbonsäuren vorzugsweise ausgewählt sind aus der Gruppe bestehend aus Oxalsäure, Malonsäure, Bernsteinsäure, Glutarsäure, Adipinsäure, Pimelinsäure, Korksäure, Azelainsäure, Sebacinsäure, Undecandisäure, Dodecandisäure, Tridecandisäure, Tetradecandisäure und Hexadecandisäure.

Umsetzungsprodukte gemäß I) dieser besonders bevorzugten 2-wertigen Carbonsäuren sind dabei vorzugsweise solche der Formel (II): 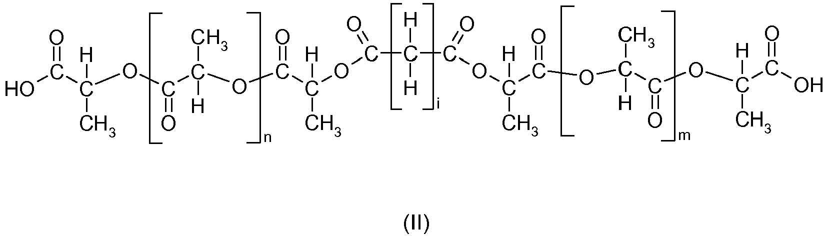 wobei n, m und i in der Verbindung der Formel (II) unabhängig voneinander und unabhängig von gegebenenfalls vorliegenden weiteren Farbentwicklern der Formel (II) ganze Zahlen sind; vorzugsweise sind n und m unabhängig voneinander und unabhängig von gegebenenfalls vorliegenden weiteren Farbentwicklern der Formel (11) ganze Zahlen im Bereich von 1 bis 50 und i ist unabhängig von n oder m und unabhängig von gegebenenfalls vorliegenden weiteren Verbindungen der Formel (II) eine ganze Zahl im Bereich von 0 bis 18. Besonders bevorzugt ist i eine ganze Zahl im Bereich von 0 bis 10 In einer bevorzugten Verbindung der Formel (II) ist i = 0, d.h. die umgesetzte zweiwertige organische Säure ist Oxalsäure.

Verbindungen der Formel (II) besitzen vorteilhafterweise zwei freie Carboxylgruppen.

Besonders bevorzugt ist eine erfindungsgemäße Zusammensetzung (wie oben beschrieben, vorzugsweise eine Zusammensetzung wie oben als bevorzugt definiert), wobei einer, zwei, drei, mehr als drei oder sämtliche der Farbentwickler eine Verbindung bzw. Verbindungen der Formel (IIa) sind 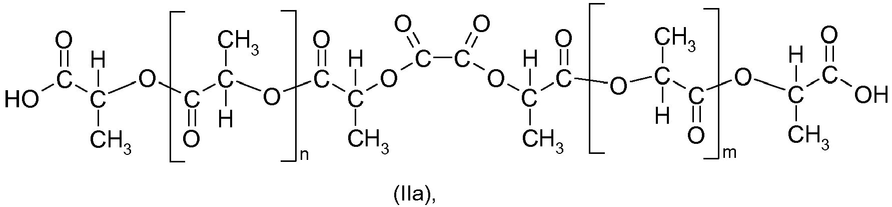 wobei n und m in der Verbindung der Formel (IIa) unabhängig voneinander und unabhängig von gegebenenfalls vorliegenden weiteren Farbentwicklern der Formel (IIa) ganze Zahlen sind, vorzugsweise unabhängig voneinander und unabhängig von gegebenenfalls vorliegenden weiteren Farbentwicklern der Formel (IIa) ganze Zahlen im Bereich von 1 bis 50. Die zwei Carboxylgruppen der im Formelbild mittig angeordneten Oxalsäuregruppe sind dabei mit je einer Hydroxylgruppe je einer von insgesamt zwei Verbindungen (jeweils enthaltend eine strukturelle Einheiten der Formel (I), wobei die Bedeutung von z in der ersten strukturellen Einheit der Formel (I) n, in der zweiten strukturellen Einheit der Formel (I) m ist) verestert. Es hat sich in eigenen Untersuchungen als vorteilhaft erwiesen, dass Verbindungen der Formel (II) und Verbindungen der Formel (IIa) zwei freie Carboxylgruppen aufweisen.

In anderen Fällen ist eine erfindungsgemäße Zusammensetzung bevorzugt (wie oben beschrieben, vorzugsweise eine Zusammensetzung wie oben als bevorzugt definiert), wobei die 2-wertigen Säuren, ausgewählt sind aus der Gruppe bestehend aus Maleinsäure, Fumarsäure, Apfelsäure, Weinsäure, Glutaminsäure, Asparaginsäure, Phthalsäure, Isophthalsäure und Terepthalsäure.

Umsetzungsprodukte gemäß II) sind vorzugsweise solche der Formel (III): 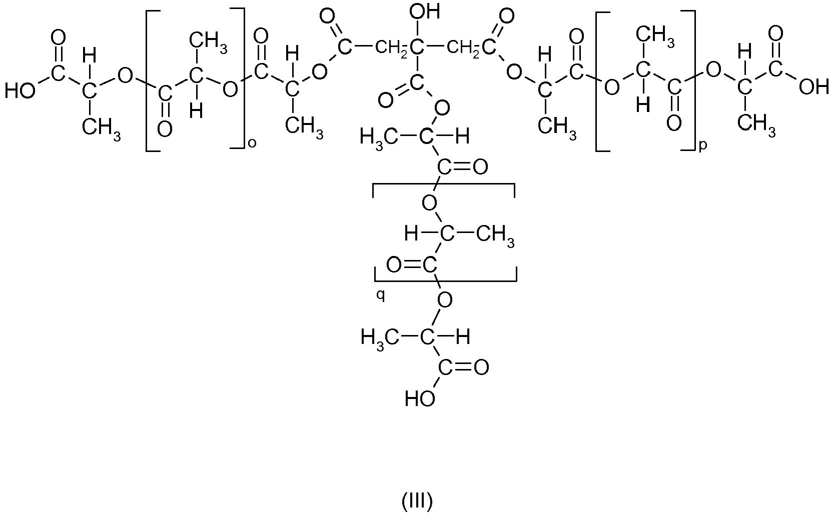 wobei, o, p und q in der Verbindung der Formel (III) unabhängig voneinander und unabhängig von gegebenenfalls vorliegenden weiteren Farbentwicklern der Formel (III) ganze Zahlen sind, vorzugsweise unabhängig voneinander und unabhängig von gegebenenfalls vorliegenden weiteren Farbentwicklern der Formel (III) ganze Zahlen im Bereich von 1 bis 50.

Verbindungen der Formel (III) enthalten umgesetzte Zitronensäure (als 3-wertige organische Säure), wobei jede der drei Carboxylgruppen mit einer Hydroxylgruppe verestert vorliegt, und sind zum Einsatz in einer erfindungsgemäßen Zusammensetzung ganz besonders bevorzugt (wie oben beschrieben, vorzugsweise eine Zusammensetzung wie oben als bevorzugt definiert).

Verbindungen der Formel (III) besitzen vorteilhafterweise jeweils drei freie Carboxylgruppen.

Bevorzugte erfindungsgemäße Zusammensetzungen (wie oben beschrieben, vorzugsweise Zusammensetzungen wie oben als bevorzugt definiert) umfassen ein, zwei oder mehr als zwei Verbindungen, die ausgewählt sind aus der Gruppe bestehend aus Verbindungen der Formel (la), Verbindungen der Formel (II) und Verbindungen der Formel (III) (jeweils wie oben beschrieben).

Besonders bevorzugt ist eine erfindungsgemäße Zusammensetzung (wie oben beschrieben, vorzugsweise eine Zusammensetzung wie oben als bevorzugt definiert), wobei einer, zwei, drei, mehr als drei oder sämtliche der Farbentwickler
i) eine Verbindung der Formel (la) 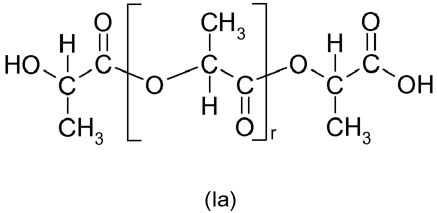 sind, wobei r in der Verbindung der Formel (la) unabhängig von gegebenenfalls vorliegenden weiteren Farbentwicklern der Formel (la) eine ganze Zahl ist, vorzugsweise unabhängig von gegebenenfalls vorliegenden weiteren Farbentwicklern der Formel (la) im Bereich von 4 bis 50 liegt
   und/oder
ii) eine Verbindung der Formel (II) wie oben definiert, beispielsweise eine Verbindung der Formel (IIa) 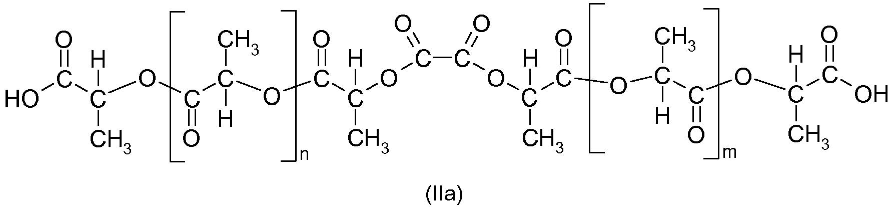 sind, wobei n und m in der Verbindung der Formel (II) bzw. (IIa) unabhängig voneinander und unabhängig von gegebenenfalls vorliegenden weiteren Farbentwicklern der Formel (II) bzw. (IIa) ganze Zahlen sind, vorzugsweise unabhängig voneinander und unabhängig von gegebenenfalls vorliegenden weiteren Farbentwicklern der Formel (II) bzw. (IIa) ganze Zahlen im Bereich von 1 bis 50 sind,
   und/oder
iii) eine Verbindung der Formel (III) 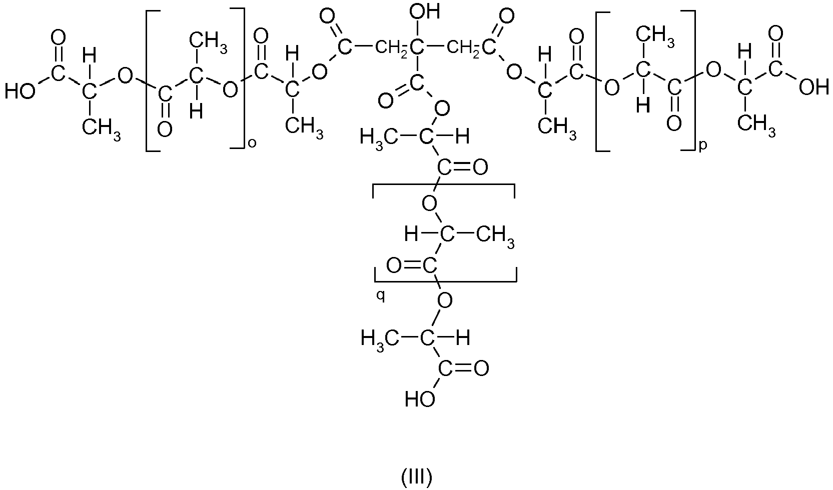 sind, wobei o, p und q in der Verbindung der Formel (III) unabhängig voneinander und unabhängig von gegebenenfalls vorliegenden weiteren Farbentwicklern der Formel (III) ganze Zahlen sind, vorzugsweise unabhängig voneinander und unabhängig von gegebenenfalls vorliegenden weiteren Farbentwicklern der Formel (III) ganze Zahlen im Bereich von 1 bis 50 sind.

Die zuvor beschriebenen (vorzugsweise als bevorzugt beschriebenen) Farbentwickler werden vorzugsweise mit bevorzugten Verbindungen der Komponente c) kombiniert.

In manchen bevorzugten Fällen enthält eine erfindungsgemäße Zusammensetzung neben mindestens einer Verbindung der Komponente a) (d.h. einem Farbentwickler wie oben beschrieben, vorzugsweise einem Farbentwickler wie oben als bevorzugt definiert), einen oder mehrere zusätzliche Farbentwickler, die keine Verbindungen der Komponente a) (und auch keine Verbindungen der Komponenten b) und c)) sind. Dieser bzw. diese zusätzlichen Farbentwickler sind vorzugsweise ausgewählt aus der Gruppe bestehend aus 2,2-Bis-(4-hydroxyphenyl)-propan, 4,4'-Dihydroxydiphenylsulfon, N-(p-Toluensulphonyl)-N'-3-(p-toluensulphonyl-oxy-phenyl)-harnstoff und 4-[(4-(1-Methylethoxy)phenyl)sulfonyl]phenol.

Ganz besonders bevorzugt ist jedoch eine erfindungsgemäße Zusammensetzung (wie oben beschrieben, vorzugsweise eine Zusammensetzung wie oben als bevorzugt definiert), wobei sämtliche in der Zusammensetzung enthaltenen Farbentwickler eine, zwei, drei oder mehr als drei strukturelle Einheiten der Formel (I) enthalten, wie oben definiert (vorzugsweise wie als bevorzugt definiert). Das bedeutet, dass solche erfindungsgemäßen Zusammensetzungen ganz besonders bevorzugt sind, die (neben einer oder mehr als einer Verbindung der Komponente c) und einer oder mehr als einer Verbindung der Komponente b)) eine Verbindung der Komponente a) oder eine Kombination mehrerer (und voneinander verschiedener) Verbindungen der Komponente a) umfassen (Verbindungen, wie oben beschrieben, vorzugsweise wie oben als bevorzugt beschrieben), wobei nur diese Verbindung(en) der Komponente a) als Farbentwickler geeignet sind. Zusätzliche Farbentwickler, die keine Verbindungen der Komponente a) sind, sind in einer solchen ganz besonders bevorzugten erfindungsgemäßen Zusammensetzung nicht enthalten.

Eine erfindungsgemäße Zusammensetzung (wie oben beschrieben, vorzugsweise eine Zusammensetzung wie oben als bevorzugt definiert) umfasst neben Verbindungen der Komponenten a), b) und c) vorzugsweise zusätzlich optionale Verbindungen. Diese optionalen Verbindungen sind vorzugsweise ausgewählt aus der Gruppe bestehend aus Bindemitteln, Sensibilisatoren, Gleit- und Trennmitteln und Pigmenten. Besonders bevorzugt ist eine erfindungsgemäße Zusammensetzung (wie oben beschrieben, vorzugsweise eine Zusammensetzung wie oben als bevorzugt definiert) bestehend aus Verbindungen der Komponenten a) und b) und c) und zusätzlich optionalen Verbindungen. Ganz besonders bevorzugt ist eine erfindungsgemäße Zusammensetzung bestehend aus Verbindungen der Komponenten a) und b) und c) und einer oder mehr Verbindungen ausgewählt aus der Gruppe bestehend aus Bindemitteln, Sensibilisatoren, Gleitmitteln, Trennmitteln und Pigmenten. Für sämtliche dieser optionalen Verbindungen gilt, dass sie keine Verbindungen der Komponenten a), b) oder c) sind.

Bevorzugt ist eine erfindungsgemäße Zusammensetzung (wie oben beschrieben, vorzugsweise eine Zusammensetzung wie oben als bevorzugt definiert) zusätzlich umfassend ein, zwei oder mehr Bindemittel, wobei das eine, eines oder mehr als eines der Bindemittel vorzugsweise ausgewählt ist aus der Gruppe bestehend aus Polyvinylalkohol, Ethylen-Vinylalkohol-Copolymer und einer Kombination aus Polyvinylalkohol und Ethylen-Vinylalkohol-Copolymer.

Geeignete Bindemittel sind zudem beispielsweise wasserlösliche Bindemittel wie Stärke, Hydroxyethylzellulose, Methylzellulose, Carboxymethylzellulose, Gelatine, Kasein, Polyvinylalkohole, modifizierte Polyvinylalkohole, Ethylen-Vinylalkohol-Copolymere, Natriumpolyacrylate, Acrylamid-Acrylat-Copolymere, Acrylamid-Acrylat-Methacrylat-Terpolymere sowie Alkalisalze von Styrol-Maleinsäureanhydrid-Copolymeren oder Ethylen-Maleinsäureanhydrid-Copolymeren, wobei die Bindemittel allein oder in Kombination untereinander eingesetzt werden können; auch wasserunlösliche Latexbinder wie Styrol-Butadiene-Copolymere, Acrylnitril-Butadien-Copolymere und Methyl-Acrylat-Butadien-Copolymere bieten sich als Bindemittel an. Polyvinylalkohol, Ethylen-Vinylalkohol-Copolymere sowie Polyvinylalkohol in Verbindung mit Ethylen-Vinylalkohol-Copolymer sind besonders bevorzugte Bindemittel und sind vorzugsweise, bezogen auf das Gesamttrockengewicht der erfindungsgemäßen Zusammensetzung, in einem Bereich von 10 bis 20 Gew.-% in die Zusammensetzung eingebunden.

Geeignete Sensibilisatoren, die zusätzlich in einer erfindungsgemäßen Zusammensetzung (wie oben beschrieben, vorzugsweise eine Zusammensetzung wie oben als bevorzugt definiert) enthalten sein können, sind beispielsweise 2-(2H-benzotriazol-2-yl)-p-cresol, Benzyl-p-benzyloxy-benzoat, Methylolstearamid, Stearinsäureamid, p-Benzylbiphenyl, 1,2-Di(phenoxy)-ethan, 1,2-Di(m-methylphenoxy)ethan, m-Terphenyl, Dibenzyloxalat, Benzylnaphthylether, Dimethylterephtalat und Diphenylsulfon, wobei Methylolstearamid, und insbesondere Stearinsäureamid und/oder Dimethylterephtalat in bestimmten Ausführungsformen der erfindungsgemäßen Zusammensetzung als bevorzugt gelten. Diese zusätzlichen Sensibilisatoren (sofern sie eingesetzt werden) werden dabei vorzugsweise in einer solchen Gesamtmenge eingesetzt, dass die dynamische und/oder statische Druckdichte zusätzlich modifiziert wird, besonders bevorzugt die maximale dynamische und/oder die maximale statische Druckdichte zusätzlich erhöht wird. Der Fachmann wird üblicherweise durch eine Reihe einfacher Vergleichsversuche die hierzu geeignete Menge an zusätzlichen Sensibilisatoren bestimmen.

In anderen Ausführungsformen umfasst eine erfindungsgemäße Zusammensetzung (wie oben beschrieben, vorzugsweise eine Zusammensetzung wie oben als bevorzugt definiert) bevorzugt nicht mehr als einen, vorzugsweise keinen zusätzlichen Sensibilisator.

Gleit- und Trennmittel dienen der Verbesserung der Gleiteigenschaften eines (vorzugsweise aus einer erfindungsgemäßen Zusammensetzung hergestellten) wärmeempfindlichen Aufzeichnungsmaterials an einem Thermokopf eines Thermodruckers und somit zur Vermeidung einer übermäßigen Abnutzung des Thermokopfes. Bevorzugte Gleit- und Trennmittel in einer erfindungsgemäßen Zusammensetzung (wie oben beschrieben, vorzugsweise eine Zusammensetzung wie oben als bevorzugt definiert) sind beispielsweise Metallsalze höherer Fettsäuren (z.B. Kalziumstearat) und Wachse (z.B Paraffin, oxidiertes Paraffin, Polyethylen, Polyethylenoxid, Stearamide und Kastorwachs).

Geeignete Pigmente in einer erfindungsgemäßen Zusammensetzung (wie oben beschrieben, vorzugsweise eine Zusammensetzung wie oben als bevorzugt definiert) sind vorzugsweise anorganische Pigmente (z.B. Aluminium(hydr)oxid, Kieselsäure und Kalziumkarbonat). Dabei ist Aluminium(hydr)oxid ein besonders bevorzugtes Pigment.

Die vorliegende Erfindung betrifft auch die Verwendung einer oder mehr als einer Verbindung ausgewählt aus der Gruppe bestehend aus Zinksalzen, Ammoniumsalzen und Zinkoxid, vorzugsweise ausgewählt aus der Gruppe bestehend aus Zinkcarbonat, Zinkoxid, Ammoniumhydrogensulfat, Ammoniumnitrat, Ammoniumhydrogenphosphat und Zinkacetat zur Modifizierung der dynamischen Druckdichte und/oder der statischen Druckdichte, vorzugsweise zur Erhöhung der maximalen dynamischen Druckdichte und/oder der maximalen statischen Druckdichte einer Mischung umfassend einen, zwei, drei oder mehr Farbentwickler sowie einen, zwei, drei oder mehr Farbstoffvorläufer zur Ausbildung einer visuell erkennbaren Farbe durch Reaktion mit dem bzw. den Farbentwicklern.

Bevorzugt ist eine erfindungsgemäße Verwendung (wie oben beschrieben) zur Modifizierung der dynamischen Druckdichte und/oder der statischen Druckdichte, vorzugsweise zur Erhöhung der maximalen dynamischen Druckdichte und/oder der maximalen statischen Druckdichte einer Mischung umfassend
a) einen, zwei, drei oder mehr Farbentwickler, jeweils umfassend eine, zwei, drei oder mehr als drei strukturelle Einheiten der Formel (I) 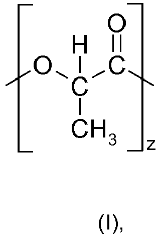 wobei z in jeder der strukturellen Einheiten der Formel (I) eine ganze Zahl größer 1 bedeutet, wobei die jeweilige Bedeutung unabhängig ist von der Bedeutung in gegebenenfalls vorhandenen weiteren strukturellen Einheiten der Formel (I),
   und
b) einen, zwei, drei oder mehr Farbstoffvorläufer zur Ausbildung einer visuell erkennbaren Farbe durch Reaktion mit dem bzw. den Farbentwicklern.

Die oben im Text beschriebene erfindungsgemäße Zusammensetzung (wie oben beschrieben, vorzugsweise eine Zusammensetzung wie oben als bevorzugt definiert) eignet sich regelmäßig hervorragend als Beschichtungsmasse zur Auftragung auf einen Träger (Substrat), d.h. die erfindungsgemäße Zusammensetzung eignet sich zur und ist vorgesehen zur Herstellung eines farbreaktiven Aufzeichnungsmaterials.

Allgemein betrifft die vorliegende Erfindung daher auch ein farbreaktives Aufzeichnungsmaterial mit einem Substrat und einer darauf ausgebildeten farbreaktiven Aufzeichnungsschicht, wobei diese farbreaktive Aufzeichnungsschicht eine erfindungsgemäße Zusammensetzung (wie oben beschrieben, vorzugsweise eine Zusammensetzung wie oben als bevorzugt definiert) umfasst oder daraus besteht. Als farbreaktives Aufzeichnungsmaterial besonders bevorzugt ist ein wärmeempfindliches Aufzeichnungsmaterial.

Ein farbreaktives Aufzeichnungsmaterial kann aber alternativ auch ein druckempfindliches Aufzeichnungsmaterial sein, wobei das druckempfindliche Aufzeichnungsmaterial die erfindungsgemäße Zusammensetzung entweder in einer einzigen oder in zwei separaten Schichten enthält. Hierbei liegen die Verbindungen der Komponente b) eingekapselt vor.

Die vorliegende Erfindung betrifft somit auch die Verwendung einer erfindungsgemäßen Zusammensetzung (wie oben beschrieben, vorzugsweise eine Zusammensetzung wie oben als bevorzugt definiert) zur Herstellung eines wärmeempfindlichen Aufzeichnungsmaterials, vorzugsweise zur Herstellung eines erfindungsgemäßen wärmeempfindlichen Aufzeichnungsmaterials (wie nachfolgend beschrieben, vorzugsweise eines Aufzeichnungsmaterials wie nachfolgend als bevorzugt definiert).

Dementsprechend betrifft die vorliegende Erfindung speziell ein wärmeempfindliches Aufzeichnungsmaterial bestehend aus oder umfassend (vorzugsweise umfassend) ein Substrat und eine wärmeempfindliche Aufzeichnungsschicht, wobei die wärmeempfindliche Aufzeichnungsschicht eine erfindungsgemäße Zusammensetzung umfasst oder daraus besteht (vorzugsweise daraus besteht). Dementsprechend gilt das zu den erfindungsgemäßen Zusammensetzungen oben Gesagte (vorzugsweise das zu bevorzugten Zusammensetzungen Gesagte) entsprechend auch hinsichtlich der erfindungsgemäßen wärmeempfindlichen Aufzeichnungsmaterialien.

Ein solches wärmeempfindliches Aufzeichnungsmaterial sieht in seiner einfachsten Ausführungsform ein Substrat und eine wärmeempfindliche Aufzeichnungsschicht vor, wobei die wärmeempfindliche Aufzeichnungsschicht aus einer erfindungsgemäßen Zusammensetzung besteht, enthaltend mindestens jeweils eine Verbindung der Komponenten a), b) und c). Dieses wärmeempfindliche Aufzeichnungsmaterial ist regelmäßig so eingerichtet, dass sich (i) die visuell erkennbare Farbe bei Erhöhung der Temperatur ausbildet und (ii) die dynamische Druckdichte und/oder die statische Druckdichte modifiziert ist, vorzugsweise die maximale dynamische Druckdichte und/oder die maximale statische Druckdichte erhöht ist (verglichen mit einem Vergleichs- oder Referenzaufzeichnungsmaterial, wie bereits weiter oben im Text beschrieben).

Besonders bevorzugt ist ein erfindungsgemäßes wärmeempfindliches Aufzeichnungsmaterial (wie oben beschrieben), wobei sämtliche in der wärmeempfindlichen Aufzeichnungsschicht enthaltenen Farbentwickler eine, zwei, drei oder mehr als drei strukturelle Einheiten der Formel (I) enthalten, wie in der erfindungsgemäßen Zusammensetzung (wie oben beschrieben, vorzugsweise eine Zusammensetzung wie oben als bevorzugt definiert) definiert. Das bedeutet, dass ein bevorzugtes erfindungsgemäßes wärmeempfindliches Aufzeichnungsmaterial (neben einer oder mehr als einer Verbindung der Komponente c) und einer oder mehr als einer Verbindung der Komponente b)) entweder nur einen einzelnen Farbentwickler, der eine Verbindung der Komponente a) ist umfasst oder eine Kombination mehrerer Farbentwickler, also eine Kombination von Verbindungen der Komponente a) umfasst. Zusätzliche Farbentwickler, die keine Verbindungen der Komponente a) sind, sind in einer solchen wärmeempfindlichen Aufzeichnungsschicht nicht enthalten.

Besonders bevorzugt ist außerdem ein erfindungsgemäßes wärmeempfindliches Aufzeichnungsmaterial (wie oben beschrieben, vorzugsweise ein Aufzeichnungsmaterial wie oben als bevorzugt definiert), wobei die wärmeempfindliche Aufzeichnungsschicht ein, zwei oder mehr Bindemittel umfasst, wobei das eine, eines oder mehr als eines der Bindemittel vorzugsweise ausgewählt ist aus der Gruppe bestehend aus Polyvinylalkohol, Ethylen-Vinylalkohol-Copolymer und einer Kombination aus Polyvinylalkohol und Ethylen-Vinylalkohol-Copolymer. Bevorzugt ist, dass das Gesamtgewicht der Bindemittel, bezogen auf das Gesamtgewicht der wärmeempfindlichen Aufzeichnungsschicht in einem Bereich von 10 bis 20 Gew.-% liegt.

Wie bereits oben ausgeführt, umfasst eine bevorzugte erfindungsgemäße Zusammensetzung ein oder mehr als ein Pigment. Das besonders bevorzugte Pigment Aluminium(hydr)oxid wird dabei vorzugsweise in einer Menge von 0 bis 45 Gew.-%, ganz besonders bevorzugt in einer Menge von 10 bis 40 Gew.-%, bezogen auf das Gesamtgewicht der Aufzeichnungsschicht, in die Aufzeichnungsschicht eingebunden.

Bevorzugt ist ein erfindungsgemäßes wärmeempfindliches Aufzeichnungsmaterial (wie oben beschrieben, vorzugsweise ein Aufzeichnungsmaterial wie oben als bevorzugt definiert), wobei das wärmeempfindliche Aufzeichnungsmaterial eine oder mehrere (vorzugsweise eine) zwischen dem Substrat und der wärmeempfindlichen Aufzeichnungsschicht angeordnete pigmenthaltige Zwischenschichten aufweist, wobei die Zwischenschicht oder die Zwischenschichten sich in ihrem Aufbau vom Substrat und von der wärmeempfindlichen Aufzeichnungsschicht unterscheidet bzw. unterscheiden.

Als Pigmente der Zwischenschicht(en) bieten sich sowohl organische Hohlraum-Pigmente als auch anorganische Pigmente an, letztere bevorzugt ausgewählt aus der Gruppe, bestehend aus natürlichem Kaolin, kalziniertem Kaolin, Siliziumoxid (hier insbesondere Bentonit), Kalziumkarbonat und Aluminiumhydroxid (hier insbesondere Böhmit). Eine solche Zwischenschicht kann einerseits einen positiven Beitrag zur Egalisierung der zu beschichtenden Oberfläche des Substrates leisten, womit sich die Menge an notwendigerweise aufzubringender Streichfarbe für die wärmeempfindliche Aufzeichnungsschicht reduziert. Aus diesem Grund bieten sich zum Auftrag der pigmenthaltigen Zwischenschicht egalisierende Streichwerke an, wie beispielsweise Walzenstreichwerke, Streichmesser- und (Roll-)Rakelstreichwerke. Andererseits können die Pigmente dieser Zwischenschicht die durch Hitzeeinwirkung verflüssigten und gegebenenfalls vorhandenen Wachsbestandteile der wärmeempfindlichen Aufzeichnungsschicht bei der Schriftbildausbildung aufnehmen und begünstigen so eine sichere und schnelle Funktionsweise der wärmeinduzierten Aufzeichnung. Die flächenbezogene Masse der pigmenthaltigen Zwischenschicht liegt bevorzugt zwischen 5 und 20 g/m², besonders bevorzugt zwischen 7 und 11 g/m².

Zusätzlich bevorzugt ist ein erfindungsgemäßes wärmeempfindliches Aufzeichnungsmaterial (wie oben beschrieben, vorzugsweise ein Aufzeichnungsmaterial wie oben als bevorzugt definiert), wobei die wärmeempfindliche Aufzeichnungsschicht vollständig oder teilweise mit einer Schutzschicht bedeckt ist. Die Schutzschicht kann dabei insbesondere als Kratzschutz dienen und/oder einen Schutz der unter ihr angeordneten wärmeempfindlichen Aufzeichnungsschicht vor organischen Lösungsmitteln wie auch vor Ölen, Fetten, Wasser und Weichmachern gewährleisten.

Die zur Herstellung erfindungsgemäßer wärmeempfindlicher Aufzeichnungsmaterialien benötigten Substrate sind sehr vielfältig. Besonders bevorzugt ist ein wärmeempfindliches Aufzeichnungsmaterial (wie oben beschrieben, vorzugsweise ein Aufzeichnungsmaterial wie oben als bevorzugt definiert), wobei das Substrat ausgewählt ist aus der Gruppe bestehend aus Papier, Film, Kunststoff und Folien.

Auch wenn das Substrat im vorliegenden erfindungsgemäßen wärmeempfindlichen Aufzeichnungsmaterial nicht auf Papier beschränkt ist, ist Papier und hier speziell ein nicht-oberflächenbehandeltes Streichrohpapier das Substrat, das sich am Markt auch mit Blick auf die gute Umweltverträglichkeit wegen der guten Recyclingfähigkeit durchgesetzt hat. Dieses nicht-oberflächenbehandelte Streichrohpapier ist daher besonders bevorzugt. Unter einem nicht-oberflächenbehandelten Streichrohpapier ist ein nicht in einer Leimpresse oder in einer Beschichtungsvorrichtung behandeltes Streichrohpapier zu verstehen. Für die Erfindung sind im gleichen Maße Folien beispielsweise aus Polypropylen, Polyolefin und mit Polyolefin beschichtete Papiere als Substrat möglich, ohne dass eine solche Ausführung ausschließenden Charakter aufweist, d.h. auf solche Substrate beschränkt ist.

Besonders bevorzugt ist ein erfindungsgemäßes wärmeempfindliches Aufzeichnungsmaterial (wie oben beschrieben, vorzugsweise ein Aufzeichnungsmaterial wie oben als bevorzugt definiert), wobei die flächenbezogene Masse der wärmeempfindlichen Aufzeichnungsschicht auf dem Substrat zwischen 2 g/m² und 9 g/m² liegt, vorzugsweise zwischen 2,2 g/m² und 7 g/m².

Die vorliegende Erfindung betrifft auch ein Verfahren zur Herstellung eines erfindungsgemäßen wärmempfindlichen Aufzeichnungsmaterials (wie oben beschrieben, vorzugsweise ein Aufzeichnungsmaterial wie oben als bevorzugt definiert), umfassend die Schritte
- Herstellen oder Bereitstellen einer erfindungsgemäßen Zusammensetzung (wie oben beschrieben, vorzugsweise eine Zusammensetzung wie oben als bevorzugt definiert)
- Herstellen oder Bereitstellen eines Substrates (wie oben beschrieben, vorzugsweise ein Substrat wie oben als bevorzugt definiert)
- Beschichtung des Substrates mit der Zusammensetzung,
wobei vorzugsweise der Schritt des Beschichtens mittels einer Beschichtungsvorrichtung durchgeführt wird, wobei bevorzugt die Beschichtungsvorrichtung ausgewählt ist aus der Gruppe bestehend aus Rollrakelstreichwerk, Messerstreichwerk, Vorhangbeschichter und Luftbürste.

Bevorzugt ist ein erfindungsgemäßes Verfahren (wie oben beschrieben, vorzugsweise ein Verfahren wie oben als bevorzugt definiert), wobei zusätzlich eine oder mehrere Zwischenschichten und/oder Schutzschichten aufgetragen werden.

Die im vorliegenden Text gemachten Angaben zu flächenbezogenen Massen bzw. zu Gew.-% (Gewichts-%) beziehen sich jeweils auf das "atro"-Gewicht, d.h. auf absolut trockene Gewichtsteile.

Nachfolgend wird die vorliegende Erfindung anhand von Beispielen näher beschreiben:

### Beispiele:

### 1. Zusammensetzungen:

Für die Ermittlung der maximalen dynamischen bzw. statischen Druckdichte ausgewählter erfindungsgemäßer Zusammensetzungen bzw. daraus hergestellter erfindungsgemäßer wärmeempfindlicher Aufzeichnungsmaterialien wurden in einem ersten Arbeitsschritt zwei Vergleichszusammensetzungen (Referenzzusammensetzungen, R1 und R2) und 4 zusätzliche erfindungsgemäße Zusammensetzungen (Z1 bis Z4) hergestellt. Die Bestandteile jeder einzelnen Zusammensetzung sind in Tabelle 1 aufgelistet. Die darin genannten Mengenangaben sind Trockengewichtsanteile bezogen auf 1 Trockengewichtsanteil des Farbstoffvorläufers 3-Dibutylamino-6-methyl-7-anilinofluoran. Die Mengen an Zinkoxid, Zinkacetat, Zinkcarbonat und Ammoniumhydrogensulfat entsprechen dabei ca. äquimolaren Mengen an Zinkverbindungen.

**Tabelle 1**

| | **Trockengewichtsanteile (atro-Gewichtsanteile)** | | | | | |
|---|---|---|---|---|---|---|
| **Bestandteil** | **R1** | **R2** | **Z1** | **Z2** | **Z3** | **Z4** |
| Verbindung der Komponente a) | 3 | 3 | 3 | 3 | 3 | 3 |
| Polyvinylalkohol | 1 | 1 | 1 | 1 | 1 | 1 |
| 3-Dibutylamino-6-methyl-7-anilinofluoran | 1 | 1 | 1 | 1 | 1 | 1 |
| N-Hydroxymethyloctadecanamide | - | 1 | - | - | - | - |
| Zinkoxid | - | - | 1 | - | - | - |
| Zinkacetat | - | - | - | 2,70 | - | - |
| Zinkcarbonat | - | - | - | - | 1,54 | |
| Ammoniumhydrogensulfat | - | - | - | - | - | 1 |

### 2. wärmeempfindliche Aufzeichnungsmaterialien:

In einem zweiten Arbeitsschritt wurden die oben genannten Zusammensetzungen zu einer Beschichtungsmasse verarbeitet und anschließend jeweils auf ein Papier (Substrat) mittels Laborrollrakelverfahren aufgetragen, so dass 6 verschiedene wärmeempfindliche Aufzeichnungsmaterialien resultierten. Als Substrat wurde ein vorgestrichenes 75g/m² Rohpapier eingesetzt, wobei der Vorstrich überwiegend aus einem natürlichen Kaolin bestand. Papier, welches mit den Zusammensetzungen R1 bzw. R2 beschichtet wurde, ergab zwei Referenzaufzeichnungsmaterialien (Beispiel 1 und Beispiel 2); die Zusammensetzungen Z1 bis Z4 ergaben zusätzlich 4 erfindungsgemäße wärmeempfindliche Aufzeichnungsmaterialien (Beispiel 3 bis Beispiel 6), wobei jede Zusammensetzung so aufgetragen wurde, dass jeweils eine identische Menge an Farbstoffvorläufer (d.h. an 3-Dibutylamino-6-methyl-7-anilinofluoran) pro m² Substrat aufgetragen wurde.

### 3. Bestimmung der maximalen Druckdichten:

Zur Bestimmung der maximalen Druckdichten der Beispiele 1 bis 6 wurden (i) dynamische und (ii) statische Druckdichtekurven erstellt und ausgewertet.

### 3.1 maximale dynamische Druckdichte:

Zur Ermittlung der maximalen dynamischen Druckdichte für jedes der Beispiele 1 bis 6 wurden jeweils schwarz/weiß-kariert gestaltete Thermoprobeausdrucke mit einem Gerät des Typs Atlantek 400 der Firma Printrex (USA) erstellt, wobei die wärmeempfindlichen Aufzeichnungsmaterialien (Beispiel 1 bis Beispiel 6) mit einer Energie im Bereich von 3 bis 16 mJ/mm² ausgedruckt wurden.

Jeder Thermoprobeausdruck wurde anschließend mittels eines Densitometers des Typs Gretag MacBeth TYPE D19C NB/U untersucht. Die mittels Densitometer erhaltenen Messergebnisse (d.h. die Druckdichteangaben in ODU) wurden gegen die entsprechenden Energieeinträge aufgetragen und ergaben eine dynamische Druckdichtekurve. Die für jedes Beispiel ermittelte maximale dynamische Druckdichte Dₘₐₓ (dynamisch) (d.h. der höchste erreichte Wert auf der Y-Achse in der dynamischen Druckdichtekurve) ist in Tabelle 2 dargestellt.

**Tabelle 2**

| | Beispiel 1 (R1) | Beispiel 2 (R2) | Beispiel 3 (Z1) | Beispiel 4 (Z2) | Beispiel 5 (Z3) | Beispiel 6 (Z4) |
|---|---|---|---|---|---|---|
| Dₘₐₓ (dynamisch) | 0,42 | 0,33 | 0,60 | 0,81 | 0,53 | 0,46 |

Die in Tabelle 2 dargestellten Ergebnisse zeigen, dass die maximale dynamische Druckdichte erfindungsgemäßer wärmeempfindlicher Aufzeichnungsmaterialien (d.h. der Beispiele 3 bis 6) gegenüber den Referenzaufzeichnungsmaterialien (Beispiel 1 und Beispiel 2) erhöht ist. Vergleicht man beispielsweise die maximalen dynamische Druckdichten der Aufzeichnungsmaterialien der Beispiele 1 und 4 miteinander, so ist die maximale dynamische Druckdichte im Aufzeichnungsmaterial des Beispiels 4 (enthaltend Zinkacetat) um ca. Faktor 2 erhöht verglichen mit dem Referenzmaterial (Beispiel 1), enthaltend keine Verbindung der Komponente c).

(Anmerkung: Für eine Vielzahl bevorzugter Verbindungen der Komponente a) ergaben sich qualitativ ähnliche Ergebnisse; vorstehend ist aus Gründen der Übersichtlichkeit nur ein einzelnes Ergebnis exemplarisch wiedergegeben)

### 3.2 maximale statische Druckdichte:

Zur Ermittlung der maximalen statischen Druckdichte für jedes der Beispiele 1 bis 6 wurden Thermoprobeausdrucke mit einem Gerät des Typs Heat Gradient der Firma Toyoseiki (Japan) erstellt, wobei die Thermoprobeausdrucke bei Temperaturen im Bereich von 65 bis 140 °C erstellt wurden. Jeder Thermoprobeausdruck wurde bei einer Kontaktzeit von 2 Sekunden und bei einem Anpressdruck von 0,3 mPa erstellt.

Jeder Thermoprobeausdruck wurde anschließend mittels eines Densitometers des unter 3.1 beschriebenen Typs untersucht. Die erhaltenen Messergebnisse (d.h. die Druckdichteangaben in ODU) wurden gegen die entsprechenden Temperaturen aufgetragen und ergaben eine statische Druckdichtekurve. Die für jedes Beispiel ermittelte maximale statische Druckdichte D_{max (statisch)} (d.h. der höchste erreichte Wert auf der Y-Achse in der statischen Druckdichtekurve) ist in Tabelle 3 dargestellt.

**Tabelle 3**

| | Beispiel 1 (R1) | Beispiel 2 (R2) | Beispiel 3 (Z1) | Beispiel 4 (Z2) | Beispiel 5 (Z3) | Beispiel 6 (Z4) |
|---|---|---|---|---|---|---|
| Dₘₐₓ (statisch) | 0,15 | 0,20 | 0,61 | 0,85 | 0,53 | 0,70 |

Die in Tabelle 3 dargestellten Ergebnisse zeigen ebenfalls, dass die maximale statische Druckdichte erfindungsgemäßer wärmeempfindlicher Aufzeichnungsmaterialien (d.h. der Beispiele 3 bis 6) gegenüber den Referenzaufzeichnungsmaterialien (Beispiel 1 und Beispiel 2) erhöht ist. Vergleicht man auch hier beispielsweise die maximalen statischen Druckdichten der Aufzeichnungsmaterialien der Beispiele 1 und 4 miteinander, so ist die maximale statische Druckdichte im Aufzeichnungsmaterial des Beispiels 4 sogar um mehr als das 5-fache erhöht.

(Anmerkung: Für eine Vielzahl bevorzugter Verbindungen der Komponente a) ergaben sich qualitativ ähnliche Ergebnisse; vorstehend ist aus Gründen der Übersichtlichkeit nur ein einzelnes Ergebnis exemplarisch wiedergegeben)

Die erfindungsgemäßen wärmeempfindlichen Aufzeichnungsmaterialien (Beispiel 3 bis 6) zeigen darüber hinaus, dass sowohl die maximale dynamische als auch die maximale statische Druckdichte erhöht ist, verglichen mit dem Referenzaufzeichnungsmaterial (Beispiel 1).

## Patentansprüche

1. Zusammensetzung zur Ausbildung einer visuell erkennbaren Farbe, umfassend die Komponenten:
a) einen, zwei, drei oder mehr Farbentwickler, jeweils umfassend eine, zwei, drei oder mehr als drei strukturelle Einheiten der Formel (I) 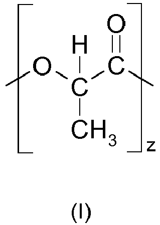 wobei z in jeder der strukturellen Einheiten der Formel (I) eine ganze Zahl größer 1 bedeutet, wobei die jeweilige Bedeutung unabhängig ist von der Bedeutung in gegebenenfalls vorhandenen weiteren strukturellen Einheiten der Formel (I),
b) einen, zwei, drei oder mehr Farbstoffvorläufer zur Ausbildung der visuell erkennbaren Farbe durch Reaktion mit dem bzw. den Farbentwicklern,
und
c) eine, zwei oder mehr Verbindungen, ausgewählt aus der Gruppe bestehend aus Zinksalzen, Ammoniumsalzen und Zinkoxid.

2. Zusammensetzung nach Anspruch 1, wobei die Gesamtmenge der Komponente c) im Bereich von 7 bis 33 Gew.-% liegt, vorzugsweise im Bereich von 12 bis 25 Gew.-%, bevorzugt im Bereich von 14 bis 20 Gew.-%, bezogen auf die Gesamtmasse der Komponenten a) und b) und c).

3. Zusammensetzung nach einem der vorherigen Ansprüche, wobei einer, zwei, drei, mehr als drei oder sämtliche der Farbstoffvorläufer eine Verbindung ist bzw. sind, ausgewählt aus der Gruppe bestehend aus 3-Diethylamino-6-methyl-7-anilinofluoran, 3-Dibutylamino-6-methyl-7-anilinofluoran, 3-(N-methyl-N-propyl)amino-6-methyl-7-anilinofluoran, 3-(N-ethyl-N-isoamyl)amino-6-methyl-7-anilinofluoran, 3-(N-methyl-N-cyclohexyl)amino-6-methyl-7-anilinofluoran, 3-(N-ethyl-N-tolyl)amino-6-methyl-7-anilinofluoran und 3-(N-ethyl-N-tetrahydrofuryl)amino-6-methyl-7-anilinofluoran.

4. Zusammensetzung nach einem der vorangehenden Ansprüche, wobei einer, zwei, drei, mehr als drei oder sämtliche der Farbentwickler hergestellt sind durch
I) Umsetzung jeweils einer x-wertigen Carbonsäure mit Verbindungen enthaltend strukturelle Einheiten der Formel (I), wobei z in jeder der strukturellen Einheiten der Formel (I) eine ganze Zahl größer 1 bedeutet, wobei die jeweilige Bedeutung unabhängig ist von der Bedeutung in gegebenenfalls vorhandenen weiteren strukturellen Einheiten der Formel (I), wobei x zwei, drei oder mehr als drei ist.

5. Zusammensetzung nach einem der vorangehenden Ansprüche, umfassend zwei, drei oder mehr als drei Farbentwickler,
(I) wobei ein erster Farbentwickler hergestellt ist durch
Umsetzung einer x-wertigen Carbonsäure mit Verbindungen enthaltend strukturelle Einheiten der Formel (I), wobei z in jeder der strukturellen Einheiten der Formel (I) eine ganze Zahl größer 1 bedeutet, wobei die jeweilige Bedeutung unabhängig ist von der Bedeutung in gegebenenfalls vorhandenen weiteren strukturellen Einheiten der Formel (I), wobei x zwei, drei oder mehr als drei ist,
(II) und wobei ein zweiter Farbentwickler hergestellt ist durch
Umsetzung einer y-wertigen Carbonsäure mit Verbindungen enthaltend strukturelle Einheiten der Formel (I), wobei z in jeder der strukturellen Einheiten der Formel (I) eine ganze Zahl größer 1 bedeutet, wobei die jeweilige Bedeutung unabhängig ist von der Bedeutung in gegebenenfalls vorhandenen weiteren strukturellen Einheiten der Formel (I), wobei y drei oder mehr als drei ist,
mit der Maßgabe, dass die x-wertige Carbonsäure nicht identisch ist mit der y-wertigen Carbonsäure, wobei y vorzugsweise größer ist als x.

6. Zusammensetzung nach einem der vorangehenden Ansprüche, wobei sämtliche in der Zusammensetzung enthaltenen Farbentwickler eine, zwei, drei oder mehr als drei strukturelle Einheiten der Formel (I) enthalten, wie in einem der Ansprüche 1 bis 5 definiert.

7. Zusammensetzung nach einem der vorangehenden Ansprüche, zusätzlich umfassend ein, zwei oder mehr Bindemittel, wobei das eine, eines oder mehr als eines der Bindemittel vorzugsweise ausgewählt ist aus der Gruppe bestehend aus Polyvinylalkohol, Ethylen-Vinylalkohol-Copolymer und einer Kombination aus Polyvinylalkohol und Ethylen-Vinylalkohol-Copolymer.

8. Verwendung einer oder mehr als einer Verbindung ausgewählt aus der Gruppe bestehend aus Zinksalzen, Ammoniumsalzen und Zinkoxid, vorzugsweise ausgewählt aus der Gruppe bestehend aus Zinkcarbonat, Zinkoxid, Ammoniumhydrogensulfat, Ammoniumnitrat, Ammoniumhydrogenphosphat und Zinkacetat zur Modifizierung der dynamischen Druckdichte und/oder der statischen Druckdichte, vorzugsweise zur Erhöhung der maximalen dynamischen Druckdichte und/oder der maximalen statischen Druckdichte einer Mischung umfassend einen, zwei, drei oder mehr Farbentwickler sowie einen, zwei, drei oder mehr Farbstoffvorläufer zur Ausbildung einer visuell erkennbaren Farbe durch Reaktion mit dem bzw. den Farbentwicklern.

9. Verwendung nach Anspruch 8, zur Modifizierung der dynamischen Druckdichte und/oder der statischen Druckdichte, vorzugsweise zur Erhöhung der maximalen dynamischen Druckdichte und/oder der maximalen statischen Druckdichte einer Mischung umfassend
a) einen, zwei, drei oder mehr Farbentwickler, jeweils umfassend eine, zwei, drei oder mehr als drei strukturelle Einheiten der Formel (I) 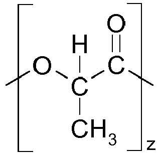 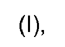 wobei z in jeder der strukturellen Einheiten der Formel (I) eine ganze Zahl größer 1 bedeutet, wobei die jeweilige Bedeutung unabhängig ist von der Bedeutung in gegebenenfalls vorhandenen weiteren strukturellen Einheiten der Formel (I),
und
b) einen, zwei, drei oder mehr Farbstoffvorläufer zur Ausbildung einer visuell erkennbaren Farbe durch Reaktion mit dem bzw. den Farbentwicklern.

10. Verwendung einer Zusammensetzung nach einem der Ansprüche 1 bis 7 zur Herstellung eines wärmeempfindlichen Aufzeichnungsmaterials, vorzugsweise zur Herstellung eines wärmeempfindlichen Aufzeichnungsmaterials nach einem der Ansprüche 11 bis 12.

11. Wärmeempfindliches Aufzeichnungsmaterial bestehend aus oder umfassend ein Substrat und eine wärmeempfindliche Aufzeichnungsschicht, wobei die wärmeempfindliche Aufzeichnungsschicht eine Zusammensetzung nach einem der Ansprüche 1 bis 7 umfasst oder daraus besteht.

12. Wärmeempfindliches Aufzeichnungsmaterial nach Anspruch 11, wobei sämtliche in der wärmeempfindlichen Aufzeichnungsschicht enthaltenen Farbentwickler eine, zwei, drei oder mehr als drei strukturelle Einheiten der Formel (I) enthalten, wie in einem der Ansprüche 1 bis 7 definiert.

13. Verfahren zur Herstellung eines wärmempfindlichen Aufzeichnungsmaterials nach einem der Ansprüche 11 bis 12, umfassend die Schritte
- Herstellen oder Bereitstellen einer Zusammensetzung nach einem der Ansprüche 1 bis 7
- Herstellen oder Bereitstellen eines Substrates
- Beschichtung des Substrates mit der Zusammensetzung,
wobei vorzugsweise der Schritt des Beschichtens mittels einer Beschichtungsvorrichtung durchgeführt wird, wobei bevorzugt die Beschichtungsvorrichtung ausgewählt ist aus der Gruppe bestehend aus Rollrakelstreichwerk, Messerstreichwerk, Vorhangbeschichter und Luftbürste.

## Claims

1. A composition for forming a visually discernible color comprising the components:
a) one, two, three or more color developers comprising in each instance one, two, three, or more than three structural units of formula (I) 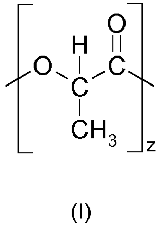 wherein, in each of the structural units of formula (I), z means an integer greater than 1, wherein the respective meaning is independent of the meaning in further structural units of formula (I) which may be present;
b) one, two, three or more dye precursors for forming the visually discernible color through reaction with the color developer or color developers;
and
c) one, two or more compounds selected from the group consisting of zinc salts, ammonium salts and zinc oxide.

2. The composition according to claim 1, wherein the total amount of component c) is in the range of from 7 to 33 percent by weight, preferably in the range of from 12 to 25 percent by weight, more preferably in the range of from 14 to 20 percent by weight with respect to the total mass of components a) and b) and c).

3. The composition according to one of the preceding claims, wherein one, two, three, more than three, or all of the dye precursors is or are a compound selected from the group comprising 3-diethylamino-6-methyl-7-anilinofluoran, 3-dibutylamino-6-methyl-7-anilinofluoran, 3-(N-methyl-N-propyl)amino-6-methyl-7-anilinofluoran, 3-(N-ethyl-N-isoamyl)amino-6-methyl-7-anilinofluoran, 3-(N-methyl-N-cyclohexyl)amino-6-methyl-7-anilinofluoran, 3-(N-ethyl-N-tolyl)amino-6-methyl-7-anilinofluoran, and 3-(N-ethyl-N-tetrahydrofuryl)amino-6-methyl-7-anilinofluoran.

4. The composition according to one of the preceding claims, wherein one, two, three, more than three, or all of the color developers is/are made by
I) conversion of an x-functional carboxylic acid with compounds containing structural units of formula (I), wherein z in each of the structural units of formula (I) means an integer greater than 1, wherein the respective meaning is independent of the meaning in further structural units of formula (I) which may be present; and wherein x is two, three, or more than three.

5. The composition according to one of the preceding claims, comprising two, three, or more than three color developers,
(I) wherein a first color developer is made by conversion of an x-functional carboxylic acid with compounds containing structural units of formula (I), wherein z in each of the structural units of formula (I) means an integer greater than 1, wherein the respective meaning is independent of the meaning in further structural units of formula (I) which may be present; wherein x is two, three, or more than three;
(II) and wherein a second color developer is made by conversion of a y-functional carboxylic acid compounds containing structural units of formula (I), wherein z in each of the structural units of formula (I) means an integer greater than 1, wherein the respective meaning is independent of the meaning in further structural units of formula (I) which may be present; wherein y is three, or more than three,
with the proviso that the x-functional carboxylic acid is not identical to the y-functional carboxylic acid.

6. The composition according to one of the preceding claims, wherein all of the color developers contained in the composition contain one, two, three, or more than three structural units of formula (I) as defined in any one of the claims 1 to 5.

7. The composition according to one of the preceding claims, additionally comprising one, two or more binders, wherein the one binder of the one or more than one binders is selected from the group consisting of polyvinyl alcohol, ethylene vinyl alcohol copolymer and a combination of polyvinyl alcohol and ethylene vinyl alcohol copolymer.

8. Use of one, or more than one, compound(s) selected from the group consisting of zinc salts, ammonium salts and zinc oxide, preferably selected from the group consisting of zinc carbonate, zinc oxide, ammonium hydrogen sulfate, ammonium nitrate, ammonium hydrogen phosphate and zinc acetate for modifying the dynamic print density and/or the static print density, preferably for increasing the maximum dynamic print density and/or the maximum static print density of a mixture comprising one, two, three or more color developers and one, two, three or more dye precursors for forming a visually discernible color by reaction with the color developer or color developers.

9. Use according to claim 8 for modifying the dynamic print density and/or the static print density, preferably for increasing the maximum dynamic print density and/or the maximum static print density of a mixture comprising
a) one, two, three or more color developers, comprising in each instance one, two, three, or more than three structural units of formula (I) 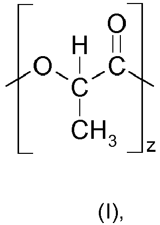 wherein , in each of the structural units of formula (I), z means an integer greater than 1, wherein the respective meaning is independent of the meaning in further structural units of formula (I) which may possibly be present,
and
b) one, two, three or more dye precursors for forming a visually discernible color through reaction with the color developer or color developers.

10. Use of a composition according to one of the claims 1 to 7 for the manufacture of a heat-sensitive recording material, preferably for the manufacture of a heat-sensitive recording material according to one of the claims 11 to 12.

11. A heat-sensitive recording material comprising or consisting of a substrate and a heat-sensitive recording layer, wherein the heat-sensitive recording layer comprises or consists of a composition according to any one of claims 1 to7.

12. The heat-sensitive recording material according to claim 11, wherein all of the color developers contained in the heat-sensitive recording layer contain one, two, three, or more than three structural units of formula (I) as defined in any one of the claims 1 to 7.

13. A process for the production of a heat-sensitive recording material according to any one of the claims 11 to 12 comprising the following steps:
- producing or providing a composition according to any one of the claims 1 to 7
- producing or providing a substrate; and
- coating the substrate with the composition;
wherein the step of coating is preferably carried out by a coating apparatus, wherein the coating apparatus is selected from the group comprising a roll doctor coating unit, knife coating unit, curtain coater and air brush.

## Revendications

1. Composition pour réaliser une couleur reconnaissable à l'oeil nu, comprenant les composants :
a) un, deux, trois ou plus révélateurs chromogènes, comprenant chacun un, deux, trois ou plus de trois motifs structuraux de formule (I) 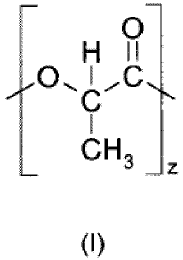 dans laquelle z, dans chacun des motifs structuraux de formule (I), représente un nombre entier supérieur à 1, chaque signification étant indépendante de la signification d'autres motifs structuraux de formule (I) éventuellement présents,
b) un, deux, trois ou plus précurseurs de colorant, pour réaliser la couleur reconnaissable à l'oeil nu par réaction avec le ou les révélateurs chromogènes,
et
c) un, deux ou plus composés choisis dans le groupe consistant en les sels de zinc, les sels d'aluminium et l'oxyde de zinc.

2. Composition selon la revendication 1, dans laquelle la quantité totale du composant c) est comprise dans la plage de 7 à 33 % en poids, de préférence dans la plage de 12 à 25 % en poids, de préférence dans la plage de 14 à 20 % en poids, par rapport à la masse totale des composants a) et b) et c).

3. Composition selon l'une des revendications précédentes, dans laquelle un, deux, trois ou plus de trois ou la totalité des précurseurs de colorant sont des composés choisis dans le groupe consistant en le 3-diéthylamino-6-méthyl-7-anilinofluoranne, le 3-dibutylamino-6-méthyl-7-anilinofluoranne, le 3-(N-méthyl-N-propyl)amino-6-méthyl-7-anilinofluoranne, le 3-(N-éthyl-N-isoamyl)amino-6-méthyl-7-anilinofluoranne, le 3-(N-méthyl-N-cyclohexyl)amino-6-méthyl-7-anilinofluoranne, le 3-(N-éthyl-N-tolyl)amino-6-méthyl-7-anilinofluoranne et le 3-(N-éthyl-N-tétrahydrofuryl)amino-6-méthyl-7-anilinofluoranne.

4. Composition selon l'une des revendications précédentes, un, deux, trois, plus de trois ou la totalité des révélateurs chromogènes étant fabriqués par
1) réaction d'un acide carboxylique x-valent avec des composés contenant des motifs structuraux de formule (I), où z, dans chacun des motifs structuraux de formule (I), représente un nombre entier supérieur à 1, la signification correspondante étant indépendante de la signification dans d'autres motifs structuraux de formule (I) éventuellement présents, x valant deux, trois ou plus de trois.

5. Composition selon l'une des revendications précédentes, comprenant deux, trois ou plus de trois révélateurs chromogènes,
(I) un premier révélateur chromogène étant fabriqué par réaction d'un acide carboxylique x-valent avec des composés contenant des motifs structuraux de formule (I), où z, dans chacun des motifs structuraux de formule (I), représente un nombre entier supérieur à 1, la signification correspondante étant indépendante de la signification dans d'autres motifs structuraux de formule (I) éventuellement présents, x valant deux, trois ou plus de trois,
(II) et un deuxième révélateur chromogène étant fabriqué par réaction d'un acide carboxylique y-valent avec des composés contenant des motifs structuraux de formule (I), où z, dans chacun des motifs structuraux de formule (I), représente un nombre entier supérieur à 1, la signification correspondante étant indépendante de la signification dans d'autres motifs structuraux de formule (I) éventuellement présents, x valant deux, trois ou plus de trois,
à la condition que l'acide carboxylique x-valent ne soit pas identique à l'acide carboxylique y-valent, y étant de préférence supérieur à x.

6. Composition selon l'une des revendications précédentes, la totalité des révélateurs chromogènes contenus dans la composition contenant un, deux, trois ou plus de trois motifs structuraux de formule (I), tels que définis dans l'une des revendications 1 à 5.

7. Composition selon l'une des revendications précédentes, comprenant en outre un, deux ou plus liants, un liant, l'un des liants ou plus de l'un des liants étant de préférence choisi dans le groupe consistant en le poly(alcool vinylique), les copolymères éthylène-alcool vinylique, et les combinaisons de poly(alcool vinylique) et d'un copolymère éthylène-alcool vinylique.

8. Utilisation d'un ou plus d'un composé choisi dans le groupe consistant en les sels de zinc, les sels d'ammonium et l'oxyde de zinc, de préférence choisis dans le groupe consistant en le carbonate de zinc, l'oxyde de zinc, l'hydrogénosulfate d'ammonium, le nitrate d'ammonium, l'hydrogénophosphate d'ammonium et l'acétate de zinc, pour modifier la densité d'impression dynamique et/ou la densité d'impression statique, de préférence pour augmenter la densité d'impression dynamique maximale et/ou la densité d'impression statique maximale d'un mélange comprenant un, deux, trois ou plus révélateurs chromogènes, ainsi qu'un, deux, trois ou plus précurseurs de colorant pour réaliser une couleur reconnaissable à l'oeil nu par réaction avec le ou les révélateurs chromogènes.

9. Utilisation selon la revendication 8, pour modifier la densité d'impression dynamique et/ou la densité d'impression statique, de préférence pour augmenter la densité d'impression dynamique maximale et/ou la densité d'impression statique maximale d'un mélange comprenant
a) un, deux, trois ou plus révélateurs chromogènes, comprenant chacun un, deux, trois ou plus de trois motifs structuraux de formule (I) 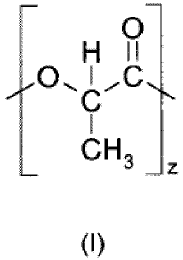 dans laquelle z, dans chacun des motifs structuraux de formule (I), représente un nombre entier supérieur à 1, chaque signification étant indépendante de la signification d'autres motifs structuraux de formule (I) éventuellement présents,
et
b) un, deux, trois ou plus précurseurs de colorant, pour réaliser la couleur reconnaissable à l'oeil nu par réaction avec le ou les révélateurs chromogènes.

10. Utilisation d'une composition selon l'une des revendications 1 à 7 pour fabriquer un matériau d'enregistrement thermosensible, de préférence pour fabriquer un matériau d'enregistrement thermosensible selon l'une des revendications 11 à 12.

11. Matériau d'enregistrement thermosensible consistant en un substrat et une couche d'enregistrement thermosensible, ou les comprenant, la couche d'enregistrement thermosensible comprenant, ou en étant constituée, une composition selon l'une des revendications 1 à 7.

12. Matériau d'enregistrement thermosensible selon la revendication 11, la totalité des révélateurs chromogènes contenus dans la couche d'enregistrement thermosensible contenant un, deux, trois ou plus de trois motifs structuraux de formule (I), tels que définis dans l'une des revendications 1 à 7.

13. Procédé de fabrication d'un matériau d'enregistrement thermosensible selon l'une des revendications 11 à 12, comprenant les étapes
- fabrication ou mise à disposition d'une composition selon l'une des revendications 1 à 7,
- fabrication ou mise à disposition d'un substrat,
- revêtement du substrat par la composition,
de préférence l'étape de revêtement étant réalisée à l'aide d'un dispositif de revêtement, le dispositif de revêtement étant de préférence choisi dans le groupe consistant en une machine à enduire à la racle, une machine à enduire au couteau, une machine à enduire au rideau et la lame d'air.
